# EUROPÄISCHE PATENTSCHRIFT

(11) **EP 4 396 013 B1**
(45) Veröffentlichungstag und Bekanntmachung des Hinweises auf die Patenterteilung: **09.07.2025**
(21) Anmeldenummer: 22769957.6
(22) Anmeldetag: 30.08.2022
(51) Int. Cl.: B60K 1/00, B60K 1/02, B60K 17/22, B60K 17/28

(54) **LEISTUNGSSTRANGANORDNUNG EINER ARBEITSMASCHINE UND ARBEITSMASCHINE**
POWERTRAIN ARRANGEMENT OF A WORK MACHINE AND A WORK MACHINE
ENSEMBLE CHAÎNE DE PUISSANCE D'UN ENGIN DE TRAVAIL ET ENGIN DE TRAVAIL

(30) Priorität: 30.08.2021 DE 102021209464
(43) Veröffentlichungstag der Anmeldung: 10.07.2024
(73) Patentinhaber: ZF Friedrichshafen AG, 88046 Friedrichshafen (DE)
(72) Erfinder: RUDOLF, Alexey, 88045 Friedrichshafen (DE); SIBER, Michael, 72477 Schwenningen (DE); GLÖCKNER, Rico, 94060 Pocking (DE); ZHU, Xiaoting, 88048 Friedrichshafen (DE)
(74) Vertreter: ZF Friedrichshafen AG
(86) Internationale Anmeldenummer: PCT/EP2022/074023
(87) Internationale Veröffentlichungsnummer: WO 2023/031159

(56) Entgegenhaltungen:
- WO-A1-2019/160957
- DE-U1- 202014 000 738
- DE-U1- 202016 101 145
- DE-U1- 202016 102 237
- KR-A- 20130 040 287

## Beschreibung

### Technisches Gebiet

Die vorliegende Erfindung bezieht sich auf eine Leistungsstranganordnung einer Arbeitsmaschine sowie eine Arbeitsmaschine.

### Stand der Technik

Bei einer Arbeitsmaschine, wie einem Radlader, weist der Antriebsstrang üblicherweise einen Verbrennungsmotor auf. Dieser Verbrennungsmotor treibt auch den Nebenantrieb für ein Werkzeug an, beispielsweise um eine Schaufel zu heben und zu senken. Ein grundsätzlicher Aufbau von verschiedenen mit Verbrennungsmotor angetriebenen Antriebsmaschinen wurde über einen langen Zeitraum optimiert, um einen zur Verfügung stehenden Bauraum effizient zu nutzen, die Kosten gering zu halten und effiziente Arbeitszyklen zu ermöglichen. Neuartige Baumaschinen sollen allerdings häufig elektrisch betrieben, beispielsweise zum Klimaschutz. Die Integration von Elektromotoren kann allerdings eine Umgestaltung bereits optimierter anderer Teile der Arbeitsmaschinen bedingen.

Aus der WO 2019/160957 A1 ist ein Antriebssystem für ein Fahrzeug bekannt, umfassend eine erste und eine zweite elektrische Maschine, ein Getriebe und eine elektrische Energieversorgung. Das Getriebe umfasst einen ersten und einen zweiten Zahnradsatz, eine mit dem ersten Zahnradsatz gekoppelte Verbindungswelle, eine Antriebswelle, die dazu ausgebildet ist, Leistung von den elektrischen Maschinen zu einem Antriebselement des Fahrzeugs zu übertragen, und eine Kupplung. Der erste Zahnradsatz ist mit der ersten elektrischen Maschine gekoppelt. Der zweite Zahnradsatz ist mit der zweiten elektrischen Maschine gekoppelt. Träger des ersten und zweiten Zahnradsatzes sind gekoppelt. Im eingerückten Zustand verbindet die Kupplung die Träger selektiv rotatorisch mit der Antriebswelle. Das Antriebssystem arbeitet in einer rein elektrischen Konfiguration, wobei die elektrische Energieversorgung elektrische Energie an mindestens eine der elektrischen Maschinen liefert, um mindestens eine der Verbindungswellen und der Antriebswelle ohne eine mechanische Energieeingabe von einem Motor in das Getriebe anzutreiben.

### Darstellung der Erfindung

Ein erster Aspekt der Erfindung betrifft einen Leistungsstranganordnung einer Arbeitsmaschine. Die Arbeitsmaschine kann als Fahrzeug ausgebildet sein, beispielsweise als Radlader oder als Grader. Ein Leistungsstrang kann beispielsweise als ein Antriebsstrang oder als ein Werkzeugstrang ausgebildet sein. Entsprechend kann mittels des Leistungsstrangs beispielsweise eine Fahrleistung bzw. eine Arbeitsleistung bereitgestellt werden. Der Leistungsstrang kann auch einen Antrieb sowohl für ein Fahren als auch für ein Werkzeug der Arbeitsmaschine bereitstellen. Ein Werkzeug einer Arbeitsmaschine kann beispielsweise eine hydraulisch betätigbare Schaufel sein. Der Leistungsstrang kann dazu ausgebildet sein, eine elektrische Energie, beispielsweise von einer Batterie der Arbeitsmaschine bereitgestellt, in mechanische Energie, wie ein Drehmoment, zu wandeln. Die Leistungsstranganordnung kann beispielsweise Komponenten des Leistungsstrangs und Komponenten eines Rahmens der Arbeitsmaschine aufweisen.

Die Leistungsstranganordnung weist einen ersten Elektromotor und einen zweiten Elektromotor sowie ein Getriebe auf. Zudem kann die Leistungsstranganordnung einen oder mehrere Inverter zur Stromversorgung der jeweiligen Elektromotoren aufweisen. Der erste Elektromotor und der zweite Elektromotor sind mit dem Getriebe zur Drehmomentübertragung verbunden. Die Elektromotoren können als Energiewandler ausgebildet sein. Ein Inverter kann beispielsweise eine Gleichspannung einer Energiequelle der Arbeitsmaschine, wie einer Batterie oder Brennstoffzelle, in eine Wechselspannung oder Drehstrom wandeln. Dieser Strom kann dem jeweiligen Elektromotor zugeführt werden, um ein Drehmoment bereitzustellen. So kann ein Fahrantrieb und alternativ oder zusätzlich ein Nebenabtrieb bereitgestellt sein, beispielsweise für eine Zapfwelle oder eine Hydraulikpumpe. Der erste Elektromotor kann beispielsweise dazu ausgebildet sein, ein Drehmoment für ein Fahren der Arbeitsmaschine bereitzustellen. Der zweite Elektromotor kann beispielsweise dazu ausgebildet sein, ein Drehmoment für den Nebenantrieb der Arbeitsmaschine bereitzustellen. So kann beispielsweise eine Schaufel der Arbeitsmaschine zu deren Bewegen mit dem zweiten Elektromotor angetrieben werden. Beispielsweise können die beiden Elektromotoren an dem Getriebe befestigt sein. Jeder Elektromotor kann mit seiner Abtriebswelle mit einer zugeordneten Antriebswelle des Getriebes verbunden sein. Das Getriebe kann für jeden damit verbundenen Elektromotor eine zugeordnete Abtriebswelle aufweisen. So kann das Drehmoment von jedem Elektromotor von dem Getriebe getrennt an unterschiedliche Verbraucher übertragen werden.

Das Getriebe kann als ein mehrgängiges Getriebe ausgebildet sein. Das Getriebe kann beispielsweise dazu ausgebildet sein, eine durch den jeweiligen Elektromotor erzeugte mechanische Leistung einem Verbraucher, wie einem Fahrantrieb oder einem Werkzeug, zur Verfügung zu stellen.

Die Leistungsstranganordnung weist ein Rahmenbauteil auf. Das Rahmenbauteil kann beispielsweise aus mehreren Elementen gebildet sein. Das Rahmenbauteil kann aus Metall gebildet sein. Diese Elemente können beispielsweise als Platten ausgebildet sein. Jeweilige Elemente des Rahmenbauteils können beispielsweise miteinander verschweißt, verschraubt oder anderweitig verbunden sein. Das Rahmenbauteil kann massiv ausgebildet sein. Das Rahmenbauteil kann als Strukturbauteil der Arbeitsmaschine ausgebildet sein. Ein Radlader kann einen Vorderwagen und einen Hinterwagen aufweisen, welche mittels eines Knickgelenks miteinander verbunden sind. Der Hinterwagen kann beispielsweise das Rahmenbauteil aufweisen. Das Rahmenbauteil kann dazu ausgebildet sein, an dessen Vorderseite mit einem Knickgelenk der Arbeitsmaschine verbunden zu werden. Die Arbeitsmaschine kann eine Lenkungsvorrichtung aufweisen, welche dazu ausgebildet ist, eine Lenkung der Arbeitsmaschine beim Fahren durch ein Verschwenken einer Vorderachse zu einer Hinterachse um eine Hochachse zu ermöglichen. Die Lenkung kann dazu beispielsweise das Knickgelenk und jeweilige Lenkzylinder, welche mit dem Rahmenbauteil verbunden sind, aufweisen.

Das Rahmenbauteil bildet einen Aufnahmeraum aus, in welchem der erste Elektromotor, der zweite Elektromotor und das Getriebe aufgenommen sind. Der Aufnahmeraum kann ein Innenraum des Rahmenbauteils sein, welcher durch diesen wenigstens teilweise begrenzt wird. Das Rahmenbauteil kann den ersten Elektromotor, den zweiten Elektromotor und das Getriebe wenigstens teilweise einhüllen. Der erste Elektromotor, der zweite Elektromotor und das Getriebe können so in dem Aufnahmeraum angeordnet sein, dass diese nicht von dem Rahmenbauteil vorstehen. Der erste Elektromotor, der zweite Elektromotor und alternativ oder zusätzlich das Getriebe können an dem Rahmenbauteil befestigt sein, beispielsweise mittels Verschraubungen.

Das Rahmenbauteil weist einen Hinterachsbrückenabschnitt auf. Der Hinterachsbrückenabschnitt ist dazu ausgebildet, daran eine Gelenkwelle, welche das Getriebe mit einer Hinterachse der Arbeitsmaschine verbindet, drehbar zu lagern. Die Hinterachse der Arbeitsmaschine kann in Fahrzeugquerrichtung verlaufen, beispielsweise bei Geradeausfahrt der Arbeitsmaschine oder in Fahrzeugquerrichtung des Hinterwagens. An der Hinterachse können beidseitig Räder der Arbeitsmaschine gelagert sein. Die Hinterachse kann als eine angetriebene Achse ausgebildet sein. Die Gelenkwelle kann beispielsweise als Kardanwelle ausgebildet sein. Die Gelenkwelle kann beispielsweise mittels eines Flanschs an dem Hinterachsbrückenabschnitt gelagert sein. Der Hinterachsbrückenabschnitt kann sich in Fahrzeughochrichtung über der Gelenkwelle erstrecken. Der Hinterachsbrückenabschnitt kann wenigstens bereichsweise bogenförmig ausgebildet sein. Die Gelenkwelle kann mit einer Abtriebswelle des Getriebes verbunden sein. Der Hinterachsbrückenabschnitt kann an einer Rückseite des Rahmenbauteils angeordnet sein und einen Teil der Rückseite ausbilden. Der Hinterachsbrückenabschnitt kann den Aufnahmeraum in Fahrzeuglängsrichtung nach hinten begrenzen. Die Rückseite kann bezogen sein auf eine Fahrzeuglängsrichtung und alternativ oder zusätzlich auf eine Vorwärtsfahrtrichtung der Arbeitsmaschine. Die Fahrzeuglängsrichtung kann einer Längsrichtung des Hinterwagens oder auch der ganzen Arbeitsmaschine, beispielsweise bei Geradeausfahrt, entsprechen. An der Vorderseite weist ein Radlader beispielsweise dessen Schaufel auf.

Jeweilige Richtungen können bezogen sein auf eine Einbaulage, beispielsweise des Rahmenbauteils. Beispielsweise können jeweilige Abtriebswellen des Getriebes dessen Einbaulage in der Arbeitsmaschine definieren. Die Einbaulage der Elektromotoren kann durch deren Verbindung mit dem Getriebe vorgegeben sein.

Das Rahmenbauteil weist einen oberseitigen Rahmenabschnitt auf. Der Rahmenabschnitt kann beispielsweise durch eine Platte gebildet sein, welche die Oberseite des Rahmenbauteils bildet. Die Oberseite und oberseitig kann auf die Fahrzeughochrichtung bezogen sein. Der oberseitige Rahmenabschnitt kann in Fahrzeughochrichtung an einen Kabinenboden der Arbeitsmaschine angrenzend angeordnet sein. Der oberseitige Rahmenabschnitt kann den Kabinenboden der Arbeitsmaschine mit seiner Oberseite wenigstens teilweise ausbilden. Dadurch kann der Kabinenboden kostensparend wenigstens teilweise durch das Rahmenbauteil gebildet sein. Die Oberseite des oberseitigen Rahmenabschnitts kann eine in Fahrzeughochrichtung weisende Fläche und alternativ oder zusätzlich eine dem Aufnahmeraum abgewandte Fläche sein. Der oberseitige Rahmenabschnitt kann den Aufnahmeraum in Fahrzeughochrichtung nach oben begrenzen.

Der erste Elektromotor und der zweite Elektromotor sind in Fahrzeugquerrichtung nebeneinander und in Fahrzeughochrichtung wenigstens teilweise auf einem gleichen Niveau angeordnet. Eine Erstreckung der beiden Elektromotoren in Fahrzeughochrichtung kann sich also beispielsweise wenigstens teilweise überschneiden. Das Niveau kann eine Position in Fahrzeughochrichtung sein. Nebeneinander kann bedeuten, dass sich eine Erstreckung der beiden Elektromotoren auch in Fahrzeuglängsrichtung wenigstens teilweise überschneidet. Diese Anordnung der beiden Elektromotoren erlaubt eine kompakte Leistungsstranganordnung.

Der erste Elektromotor und der zweite Elektromotor sind in Fahrzeughochrichtung oberhalb des Hinterachsbrückenabschnitts und unterhalb des oberseitigen Rahmenabschnitts angeordnet. Oberhalb des Hinterachsbrückenabschnitts kann bedeuten, dass sich der Hinterachsbrückenabschnitt in Fahrzeughochrichtung nur bis zu einem Niveau erstreckt, welches unterhalb einer Unterkante des ersten Elektromotors und des zweiten Elektromotors ist. Unterhalb des oberseitigen Rahmenabschnitts kann bedeuten, dass sich der erste Elektromotor und der zweite Elektromotor nur bis zu einem Niveau erstrecken, welches unterhalb einer Unterkante des oberseitigen Rahmenabschnitts ist. Durch diese Anordnung der beiden Elektromotoren sind diese besonders einfach zugänglich und können einfach in dem Aufnahmeraum angeordnet werden.

Die Leistungsstranganordnung erlaubt eine verbesserte Integration von einem elektrisch betriebenen Leistungsstrang in eine ansonsten für einen Antrieb mit Verbrennungsmotor ausgelegte Arbeitsmaschine. Beispielsweise können als Baugruppen eine Hinterachse, ein Knickgelenk, ein Nebenantrieb, übrige Rahmenteile, ein Vorderwagen und jeweilige Lenkzylinder unverändert bleiben. Der Leistungsstrang kann dennoch mit geringem Aufwand und ohne Einschränkung von sonstigem Bauraum verbaut werden. So können bestehende Arbeitsmaschinen, beispielsweise Radlader, mit neuen elektrischen Antriebssystemen ausgerüstet werden, ohne dass ansonsten umfangreiche Änderungen notwendig werden. Jeweilige Komponenten des Leistungsstrangs können so angeordnet werden, dass deren Montage, deren Anschließen an andere Komponenten und deren Wartung mit geringem Aufwand verbunden ist.

In einer Ausführungsform der Leistungsstranganordnung ist es vorgesehen, dass das Rahmenbauteil einen ersten Seitenabschnitt, einen zweiten Seitenabschnitt und einen Vorderabschnitt aufweist. Die beiden Seitenabschnitte können den Aufnahmeraum in Fahrzeugquerrichtung begrenzen. Der Vorderabschnitt kann den Aufnahmeraum in Fahrzeuglängsrichtung nach vorne begrenzen. Der Vorderabschnitt kann dazu ausgebildet sein, mit dem Knickgelenk der Arbeitsmaschine verbunden zu werden. Das Rahmenbauteil kann so die in dem Aufnahmeraum aufgenommenen Komponenten so gut vor einer Beschädigung schützen.

Der erste Seitenabschnitt kann an einem Endabschnitt des Hinterachsbrückenabschnitts angeordnet sein. Der zweite Seitenabschnitt kann an einem dazu in Fahrzeugquerrichtung gegenüberliegenden Endabschnitt des Hinterachsbrückenabschnitts angeordnet sein. Der Hinterachsbrückenabschnitt kann an einem beispielsweise rückseitigen Endabschnitt des ersten Seitenabschnitts und des zweiten Seitenabschnitts angeordnet sein. Der Vorderabschnitt kann an einem dazu in Fahrzeuglängsrichtung gegenüberliegenden Endabschnitt des ersten Seitenabschnitts und des zweiten Seitenabschnitts angeordnet sein, also beispielsweise jeweils an einem vorderseitigen Endabschnitt. Das Rahmenbauteil kann so eine einfach herzustellende Bauweise aufweisen.

Die Seitenabschnitte können beispielsweise als flache Elemente ausgebildet sein, welche sich in Fahrzeuglängsrichtung und in Fahrzeughochrichtung erstrecken. Die Seitenabschnitte können parallel zueinander angeordnet sein und alternativ oder zusätzlich identisch oder gespiegelt zueinander geformt sein. Der Hinterachsbrückenabschnitt kann beispielsweise als flaches Element ausgebildet sein, welches sich in Fahrzeugquerrichtung und in Fahrzeughochrichtung erstreckt. Der oberseitige Rahmenabschnitt kann beispielsweise als flaches Element ausgebildet sein, welches sich in Fahrzeuglängsrichtung und in Fahrzeugquerrichtung erstreckt. Der Vorderabschnitt kann beispielsweise als flaches Element ausgebildet sein, welches sich in Fahrzeugquerrichtung und in Fahrzeuglängsrichtung erstreckt. Der Vorderabschnitt kann beispielsweise parallel zu dem Hinterachsbrückenabschnitt angeordnet sein. Das Rahmenbauteil kann zusätzlich einen Bodenabschnitt aufweisen, welcher zwischen den in Fahrzeughochrichtung erstreckenden Bauteilen unterhalb des Aufnahmeraums angeordnet ist. Der Bodenabschnitt kann den Aufnahmeraum unterseitig begrenzen. Der Bodenabschnitt kann als flaches Element ausgebildet sein. Jeweilige flache Elemente können miteinander fest verbunden sein, beispielsweise mittels einer Verschweißung. Die Verschweißung kann beispielsweise entlang einer Außenkante wenigstens eines der flachen Elemente erfolgen. Mehrere oder alle flachen Elementen können auch einstückig ausgebildet sein. Die flachen Elemente können als Platten ausgebildet sein, beispielsweise als Stahlplatten. Die jeweiligen Abschnitte können den Aufnahmeraum des Rahmenbauteils begrenzen.

In einer Ausführungsform der Leistungsstranganordnung ist es vorgesehen, dass der erste Elektromotor und der zweite Elektromotor in Fahrzeuglängsrichtung rückseitig zu dem Getriebe angeordnet sind. Dadurch können die beiden Elektromotoren besonders nah zu jeweiligen Invertern und alternativ oder zusätzlich einer Stromquelle der Arbeitsmaschine, wie einer Batterie, angeordnet sein. Dadurch kann eine Strecke zum elektrischen Anschließen der beiden Elektromotoren kurz sein und die elektrische Verbindung kann vereinfacht sein. Die Stromquelle der Arbeitsmaschine kann beispielsweise in Fahrzeuglängsrichtung rückseitig zu dem Rahmenbauteil angeordnet sein.

In einer Ausführungsform der Leistungsstranganordnung ist es vorgesehen, dass das Rahmenbauteil zwischen einer Unterkante des ersten und des zweiten Elektromotors und einer Oberkante des ersten und des zweiten Elektromotors rückseitig eine Durchgangsöffnung aufweist. Die Durchgangsöffnung kann ein Bereich sein, in welchem der Aufnahmeraum nicht abgeschlossen ist. Durch die rückseitige Durchgangsöffnung ist eine elektrische Anbindung der Elektromotoren und deren Wartung einfach möglich, beispielsweise wenn die Elektromotoren rückseitig zu dem Getriebe angeordnet sind. Die Oberkante kann ein oberes Ende eines der beiden Elektromotoren sein. Die Unterkante kann ein unteres Ende eines der beiden Elektromotoren sein. Beispielsweise kann das Rahmenbauteil zwischen einem oberen Ende des Hinterachsbrückenabschnitts und unterhalb des oberseitigen Rahmenabschnitts die Durchgangsöffnung aufweisen. Die Durchgangsöffnung kann ein einfaches Einführen der beiden Elektromotoren in den Aufnahmeraum und auch ein Herausnehmen erlauben. Zudem können die beiden Elektromotoren so einfach angeschlossen werden.

In einer Ausführungsform der Leistungsstranganordnung ist es vorgesehen, dass der erste Elektromotor einen ersten Klemmenkasten mit einem elektrischen Anschluss aufweist. Der zweite Elektromotor kann einen zweiten Klemmenkasten mit einem elektrischen Anschluss aufweisen. Die Nummerierung kann dabei lediglich der Zuordnung zu dem jeweiligen Elektromotor dienen. Der zweite Elektromotor kann also beispielsweise nur einen Klemmenkasten aufweisen. Ein Klemmenkasten kann elektrische Anschlüsse zur Stromversorgung und alternativ oder zusätzlich Steuerung oder Überwachung aufweisen. Der erste Klemmenkasten kann mit seinem elektrischen Anschluss in Fahrzeuglängsrichtung nach hinten weisen. Der zweite Klemmenkasten kann mit seinem elektrischen Anschluss in Fahrzeuglängsrichtung nach hinten weisen. Dadurch kann eine elektrische Verbindung der Elektromotoren mit jeweiligen Invertern und alternativ oder zusätzlich Stromquellen der Arbeitsmaschine kurz sein.

In einer Ausführungsform der Leistungsstranganordnung ist es vorgesehen, dass die Leistungsstranganordnung einen ersten Inverter und einen zweiten Inverter aufweist. Der erste Inverter kann dazu ausgebildet sein, den ersten Elektromotor mit elektrischer Energie zu versorgen. Der zweite Inverter kann dazu ausgebildet sein, den zweiten Elektromotor mit elektrischer Energie zu versorgen. Die elektrische Energie kann durch die Inverter beispielsweise mittels eines Wechselstroms bereitgestellt werden. Der erste Inverter kann beispielsweise mit dem ersten Klemmenkasten elektrisch verbunden sein. Der zweite Inverter kann beispielsweise mit dem zweiten Klemmenkasten elektrisch verbunden sein.

Der erste Inverter und der zweite Inverter können in Fahrzeuglängsrichtung hinter dem Rahmenbauteil angeordnet sein. Dadurch kann sich eine Anordnung in Fahrzeuglängsrichtung zwischen der Stromquelle der Arbeitsmaschine und den Elektromotoren ergeben. Entsprechend können jeweilige elektrische Leitungen kurz und Verluste klein sein. Dadurch kann der Leistungsstrang sehr effizient sein. Die beiden Inverter können beispielsweise an dem Rahmenbauteil befestigt sein. Die beiden Inverter können beispielsweise an einer dem Aufnahmeraum abgewandten Seite des Rahmenbauteils befestigt sein. Die beiden Inverter können auch eine Ladevorrichtung für eine Stromquelle der Arbeitsmaschine aufweisen und alternativ oder zusätzlich einen Gleichspannungswandler. Eine Ladevorrichtung und alternativ oder zusätzlich ein Gleichspannungswandler können auch benachbart zu den Invertern positioniert sein, beispielsweise mit Befestigung an den Invertern und alternativ oder zusätzlich dem Rahmenbauteil.

Alternativ können einer der oder beide Inverter in Fahrzeugquerrichtung oder Fahrzeughochrichtung neben dem Getriebe angeordnet sein. Beispielsweise können die Inverter unterseitig an dem oberseitigen Rahmenabschnitt befestigt sein. Alternativ können die beiden Inverter auch außenseitig oder innenseitig an den Seitenabschnitten befestigt sein, beispielsweise ein Inverter pro Seitenabschnitt.

In einer Ausführungsform der Leistungsstranganordnung ist es vorgesehen, dass das Rahmenbauteil einen Inverterbefestigungsabschnitt aufweist. Die jeweiligen Inverter können an dem Inverterbefestigungsabschnitt befestigt sein, beispielsweise mittels einer Verschraubung oder Verklebung. Der erste Inverter und der zweite Inverter können rückseitig an dem Inverterbefestigungsabschnitt befestigt sein. Der Inverterbefestigungsabschnitt kann als flaches Element ausgebildet sein. Der Inverterbefestigungsabschnitt kann beispielsweise den Aufnahmeraum nicht begrenzen, sondern stattdessen dazu beispielsweise beabstandet angeordnet sein. Beispielsweise kann der Inverterbefestigungsabschnitt von einem den Aufnahmeraum begrenzenden Abschnitt abstehen. Der Inverterbefestigungsabschnitt kann sich in Fahrzeughochrichtung von einem hinteren Endabschnitt des oberseitigen Rahmenabschnitts in Fahrzeughochrichtung nach oben erstrecken. Dadurch können die Inverter so befestigt werden, dass diese eine Zugänglichkeit der beiden Elektromotoren nicht einschränken. Zudem kann der Inverterbefestigungsabschnitt so beispielsweise nicht die Anordnung der Gelenkwelle behindern. Der Inverterbefestigungsabschnitt kann an eine Kabinenrückwand der Arbeitsmaschine angrenzend angeordnet sein. Beispielsweise kann der Inverterbefestigungsabschnitt die Kabinenrückwand wenigstens teilweise mit seiner Vorderseite ausbilden. Beispielsweise können die Inverter an einem unteren Endbereich der Kabinenrückwand und damit des Inverterbefestigungsabschnitts befestigt sein. Dadurch kann die Kabinenrückwand kostensparend wenigstens teilweise durch das Rahmenbauteil gebildet sein.

In einer Ausführungsform der Leistungsstranganordnung ist es vorgesehen, dass der erste Inverter und der zweite Inverter gemeinsam als Doppelinverter ausgebildet sind. Ein Doppelinverter kann beispielsweise dazu ausgebildet sein, zwei Elektromotoren separat mit elektrischer Energie zu versorgen. Ein Doppelinverter kann beispielsweise nur ein Gehäuse aufweisen. Ein Doppelinverter kann beispielsweise nur einen Anschluss zur elektrischen Verbindung mit der Stromquelle der Arbeitsmaschine aufweisen. Ein Doppelinverter kann beispielsweise nur einen Kühlanschluss aufweisen. Ein Doppelinverter kann beispielsweise nur einen CAN-Anschluss aufweisen. Durch das Vorsehen des Doppelinverters kann dieser besonders einfach zu integrieren sein. Beispielsweise können die beiden Inverter so einfach gemeinsam an dem Inverterbefestigungsabschnitt befestigt werden und angeschlossen werden. Der Doppelinverter kann einen Anschluss für die Energieversorgung des ersten Elektromotors und einen Anschluss für die Energieversorgung des zweiten Elektromotors aufweisen.

In einer Ausführungsform der Leistungsstranganordnung ist es vorgesehen, dass das Rahmenbauteil einen Anschlussbefestigungsabschnitt aufweist. Der Anschlussbefestigungsabschnitt kann wenigstens eine Durchführung für eine Schnittstelle des Leistungsstrangs der Arbeitsmaschine aufweisen. Die Durchführung kann als Durchgangsöffnung ausgebildet sein. Die Durchführung kann an einen Querschnitt der Schnittstelle angepasst sein. Der Anschlussbefestigungsabschnitt erlaubt jeweilige Schnittstellen sicher an dem Rahmenbauteil anzuordnen. Der Anschlussbefestigungsabschnitt kann sich von einem hinteren Endbereich des oberseitigen Rahmenabschnitt nach unten erstrecken. Dadurch können jeweilige Schnittstellen geschützt in oder an dem Aufnahmeraum gehalten werden. Zudem wird so vermieden, dass die Schnittstellen einen Bauraum für die Elektromotoren belegen oder lose in dem Aufnahmeraum angeordnet sind.

In einer Ausführungsform der Leistungsstranganordnung ist es vorgesehen, dass das Getriebe eine Abtriebswelle für einen Nebenantrieb der Arbeitsmaschine aufweist. Die Abtriebswelle für den Nebenantrieb kann in Fahrzeugrichtung in einem Mittenbereich angeordnet sein. Beispielsweise kann die Abtriebswelle für den Nebenantrieb so nah wie möglich in Fahrzeugquerrichtung an eine Abtriebswelle des Getriebes für eine Hinterachse und alternativ oder zusätzlich an eine Abtriebswelle des Getriebes für eine Vorderachse angeordnet werden. Dadurch wird ein Freigang zu einem spitz zulaufenden Knickgelenk in Richtung Vorderwagen gewährleistet. Die Abtriebswelle für den Nebenantrieb kann beispielsweise an einer Vorderseite des Getriebes angeordnet sein. Die Abtriebswelle für die Hinterachse kann beispielsweise an einer Hinterseite des Getriebes angeordnet sein. Die Abtriebswelle für die Vorderachse kann beispielsweise an einer Vorderseite des Getriebes angeordnet sein. Die Abtriebswelle für die Vorderachse kann unterhalb der Abtriebswelle für den Nebenantrieb angeordnet sein. Das Rahmenbauteil kann vorne spitz zulaufend ausgebildet sein, beispielsweise in einer Draufsicht von oben.

Ein zweiter Aspekt der Erfindung betrifft eine Arbeitsmaschine. Die Arbeitsmaschine weist eine Leistungsstranganordnung gemäß dem ersten Aspekt auf. Jeweilige weitere Merkmale, Ausführungsformen und Vorteile sind den Beschreibungen des ersten Aspekts zu entnehmen. Zudem weist die Arbeitsmaschine eine Fahrerkabine, eine Gelenkwelle und eine mit der Gelenkwelle verbundene Hinterachse auf. Die Gelenkwelle ist dazu ausgebildet, ein Drehmoment von dem Getriebe an die Hinterachse zu übertragen. Die Gelenkwelle ist an dem Hinterachsbrückenabschnitt drehbar gelagert, beispielsweise mittels eines Flanschs. Der oberseitige Rahmenabschnitt ist in Fahrzeughochrichtung an den Kabinenboden der Arbeitsmaschine angrenzend angeordnet. Der oberseitige Rahmenabschnitt kann einen Teil des Kabinenbodens bilden. Die Arbeitsmaschine kann einen Vorderwagen aufweisen. Das Rahmenbauteil kann mittels eines Knickgelenks mit dem Vorderwagen um eine Hochachse schwenkbar verbunden sein.

In einer Ausführungsform der Arbeitsmaschine ist es vorgesehen, dass die Arbeitsmaschine einen Lenkzylinder aufweist, welcher an dem Rahmenbauteil mit einem Ende befestigt ist. Mit einem entgegengesetzten Ende kann der Lenkzylinder an dem Vorderwagen befestigt sein. Die Arbeitsmaschine kann ein Paar von Lenkzylindern aufweisen, wobei jeweils ein Lenkzylinder entsprechend auf einer Seite des Knickgelenks angeordnet ist.

Das Getriebe kann in einem Höhenbereich, welcher sich mit der Befestigung des Lenkzylinders an dem Rahmenbauteil überdeckt, eine geringere Erstreckung in Fahrzeugquerrichtung aufweisen als in einem anderen Höhenbereich. Eine Erstreckung in Fahrzeugquerrichtung kann eine Breite sein. Ein Höhenbereich kann eine Erstreckung in einem bestimmten Bereich in Fahrzeughochrichtung sein. Beispielsweise kann das Getriebe in einem Höhenbereich, welcher mit den Elektromotoren verbunden ist, breiter sein als in diesem Höhenbereich. Beispielsweise kann der Höhenbereich, welcher sich mit der Befestigung des Lenkzylinders an dem Rahmenbauteil überdeckt, ein Höhenbereich des Getriebes mit der geringsten Erstreckung in Fahrzeugquerrichtung sein. Dadurch kann das Getriebe leicht trotz Lenkzylindern integriert werden. Beispielsweise kann das Getriebe so im Bereich der Lenkzylinder einer Außenkontur eines Getriebes für eine ähnliche Arbeitsmaschine mit Verbrennungsmotor entsprechen.

In einer Ausführungsform der Arbeitsmaschine ist es vorgesehen, dass die Arbeitsmaschine eine Energiequelle aufweist, welche in Fahrzeuglängsrichtung hinter dem Rahmenbauteil angeordnet ist. So ist eine elektrische Verbindung jeweiliger Komponenten des Leistungsstrangs zur Versorgung mit elektrischer Energie einfach möglich. Die Energiequelle kann wiederaufladbar sein. Die Energiequelle kann die Stromquelle der Arbeitsmaschine sein. Alternativ oder zusätzlich kann die Energiequelle oberhalb des oberseitigen Rahmenabschnitts angeordnet sein.

Die Arbeitsmaschine kann ein Werkzeug aufweisen. Das Werkzeug kann beispielsweise hydraulisch betätigbar sein, wobei der Nebenantrieb dafür ein Hydraulikpumpe antreibt. Das Werkzeug kann in Fahrzeuglängsrichtung vor dem Rahmenbauteil angeordnet sein, beispielsweise an einer Vorderseite des Vorderwagens.

### Kurze Beschreibung der Figuren

Fig. 1 zeigt in einer schematischen Seitenansicht eine Arbeitsmaschine mit einer Leistungsstranganordnung.
Fig. 2 zeigt in einer schematischen rückseitigen Perspektivansicht die Leistungsstranganordnung der Arbeitsmaschine gemäß Fig 1.
Fig. 3 zeigt in einer schematischen rückseitigen Perspektivansicht Teile der Leistungsstranganordnung gemäß Fig. 2.
Fig. 4 zeigt in einer schematischen Vorderansicht die Leistungsstranganordnung gemäß Fig. 2.
Fig. 5 zeigt in einer schematischen Draufsicht die Leistungsstranganordnung gemäß Fig. 2.

### Detaillierte Beschreibung von Ausführungsformen

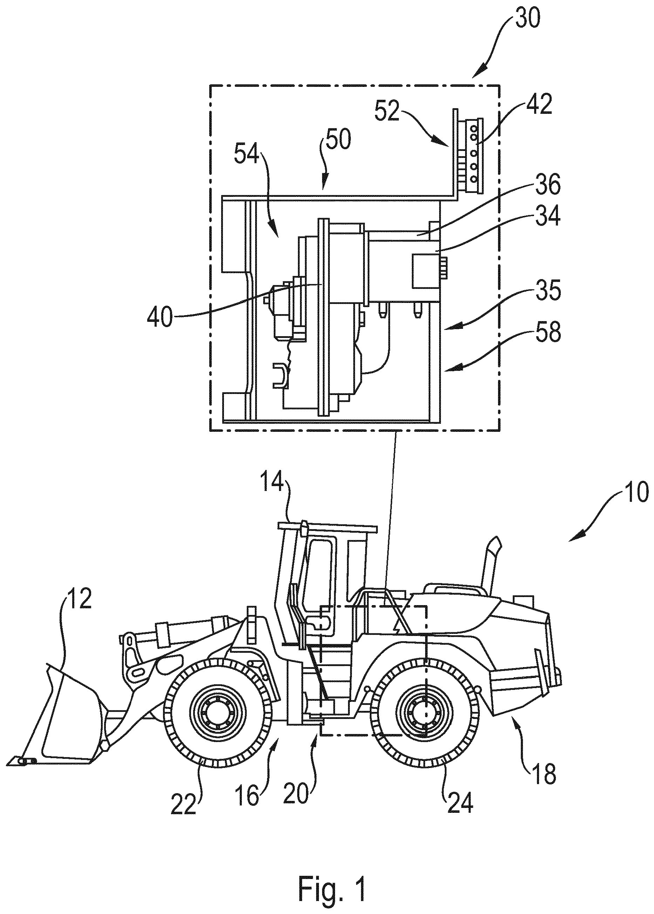

Fig. 1 veranschaulicht in einer schematischen Seitenansicht eine als Radlader ausgebildete Arbeitsmaschine 10 gemäß dem Stand der Technik. Die Arbeitsmaschine 10 weist eine Baggerschaufel 12 als Werkzeug auf, welche an einer Vorderseite eines Vorderwagens 16 der Arbeitsmaschine 10 beweglich angeordnet ist. Der Vorderwagen 16 ist rückseitig mit einer Vorderseite eines Hinterwagens 18 mittels eines Knickgelenks 20 verbunden. Die Arbeitsmaschine 10 weist eine Fahrzeuglängsrichtung auf, welche bei einer Stellung des Knickgelenks 20 für eine Geradeausfahrt gerade durch den Vorderwagen 16 und den Hinterwagen 18 verläuft. Zudem weist die Arbeitsmaschine 10 eine Fahrerkabine 14 auf, welche in Fahrzeughochrichtung über dem Knickgelenk 20 angeordnet ist. Der Vorderwagen 16 weist eine Vorderachse mit jeweiligen Rädern 22 auf. Der Hinterwagen 18 weist eine Hinterachse mit jeweiligen Rädern 24 auf. Die beiden Achsen erstrecken sich in Fahrzeugquerrichtung bei der Stellung des Knickgelenks 20 für die Geradeausfahrt.

Die Arbeitsmaschine 10 ist ursprünglich für einen Antrieb mit einem Verbrennungsmotor konzipiert. Nunmehr ist jedoch eine elektrisch betriebene Leistungsstranganordnung 30 vorgesehen. Die Leistungsstranganordnung 30 ist oberhalb der Arbeitsmaschine 10 separat und teilweise geschnitten dargestellt, wobei der Kasten 32 deren Position in der Arbeitsmaschine 10 illustriert.

Die Leistungsstranganordnung 30 weist einen ersten Elektromotor 34, einen zweiten Elektromotor 36, ein Rahmenbauteil 38, ein Getriebe 40 und einen Doppelinverter 42 auf. Beide Elektromotoren 34, 36 sind in Fahrzeuglängsrichtung rückseitig an dem Getriebe 40 befestigt. Das Getriebe 40 überträgt im Betrieb ein von dem ersten Elektromotor 34 bereitgestelltes Drehmoment von einer ersten Abtriebswelle über eine Gelenkwelle an die Hinterachse. Das Getriebe 40 überträgt im Betrieb ein von dem zweiten Elektromotor 36 bereitgestelltes Drehmoment von einer zweiten Abtriebswelle zu einem Nebenantrieb. Mit dem Nebenantrieb wird ein Hydrauliksystem der Schaufel 12 bedruckt, damit diese betätigt werden kann. Der Doppelinverter 42 bildet einen ersten Inverter zur Versorgung des ersten Elektromotors 34 mit elektrischer Energie und einen zweiten Inverter zur Versorgung des ersten Elektromotors 36 mit elektrischer Energie aus.

Das Rahmenbauteil 38 bildet einen Aufnahmeraum aus, in welchem der erste Elektromotor 34, der zweite Elektromotor 36 und das Getriebe 40 aufgenommen sind. Wie in den verschiedenen Ansichten der Leistungsstranganordnung 30 zu erkennen ist, steht kein Teil dieser Komponenten der Leistungsstranganordnung 30 nach außen vor. In Fahrzeuglängsrichtung rückseitig zu der Leistungsstranganordnung 30 ist eine Stromquelle für den Leistungsstrang in Form einer Batterie oder einer Brennstoffzelle angeordnet. Der erste Elektromotor 34 und der zweite Elektromotor 36 sind in Fahrzeugquerrichtung nebeneinander und in Fahrzeughochrichtung wenigstens teilweise auf einem gleichen Niveau angeordnet.

Das Rahmenbauteil 38 weist einen oberseitigen Rahmenabschnitt 50 auf, welcher den Aufnahmeraum in Fahrzeughochrichtung nach oben begrenzt und einen Boden der Fahrerkabine 14 teilweise ausbildet. Von einem rückseitigen Endabschnitt des oberseitigen Rahmenabschnitts 50 erstreckt sich ein Inverterbefestigungsabschnitt 52 in Fahrzeughochrichtung nach oben. Der Inverterbefestigungsabschnitt 52 bildet eine Kabinenrückwand der Fahrerkabine 14 teilweise aus. Rückseitig ist der Doppelinverter 42 an dem Inverterbefestigungsabschnitt 52 außerhalb des Aufnahmeraums befestigt.

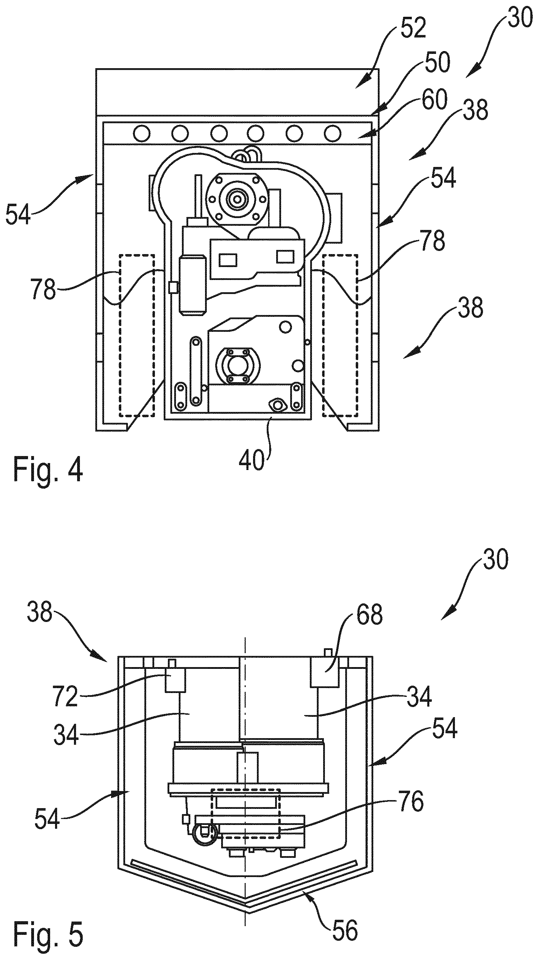

In Fahrzeugquerrichtung nach vorne wird der Aufnahmeraum durch zwei Seitenabschnitte 54 des Rahmenbauteils 38 begrenzt, welche sich in Fahrzeuglängsrichtung parallel zueinander erstrecken. Eine Vorderseite des Aufnahmeraums ist durch einen Vorderabschnitt 56 des Rahmenbauteils begrenzt. Wie in der Draufsicht von Fig. 5 zu erkennen ist, ist der Vorderabschnitt 56 im Wesentlichen V-förmig ausgebildet, um einen Freiraum für das Verschwenken des Vorderwagens 16 relativ zu dem Hinterwagen 18 um das Knickgelenk 20 bereitzustellen. Der Vorderabschnitt 56 erstreckt sich zwischen den beiden Seitenabschnitten 54 an deren vorderseitigen Endabschnitt.

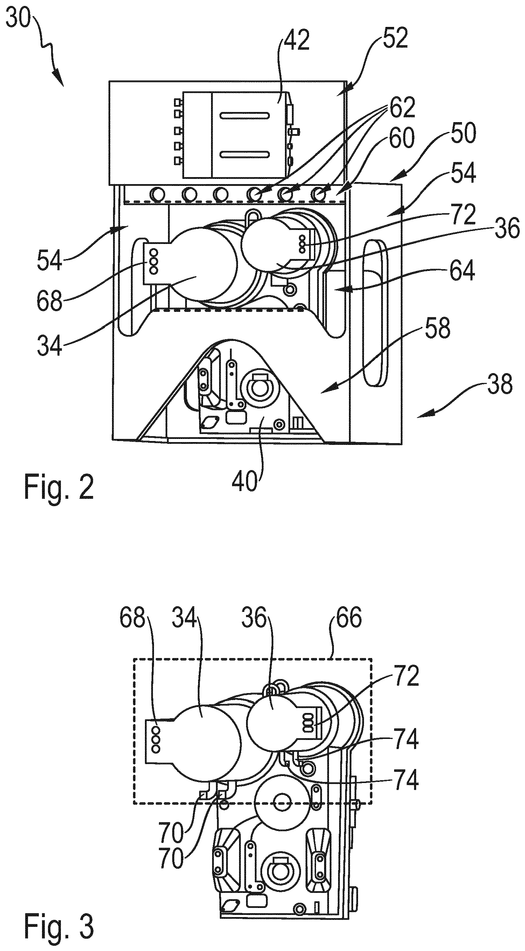

Das Rahmenbauteil 38 weist einen Hinterachsbrückenabschnitt 58 auf, welcher sich zwischen den beiden Seitenabschnitten 54 an deren hinterseitigen Endabschnitten erstreckt. Der Hinterachsbrückenabschnitt 58 begrenzt den Aufnahmeraum in Fahrzeuglängsrichtung nach hinten. An dem Hinterachsbrückenabschnitt 58 ist an einer Unterkante die Gelenkwelle zur Drehmomentübertragung an die Hinterachse mittels eines Flansches gelagert. Wie in der rückseitigen Perspektivansicht gemäß Fig. 2 zu erkennen ist, ist der Hinterachsbrückenabschnitt 58 an seiner Unterkante bogenförmig ausgebildet. Dadurch wird an einem unteren Ende des Aufnahmeraums eine Durchgangsöffnung bereitgestellt, durch welche die Gelenkwelle verläuft. Die Gelenkwelle ist rückseitig mit dem Getriebe 40 verbunden.

Das Rahmenbauteil 38 weist eine weitere Durchgangsöffnung 64 zwischen einer Oberkante des Hinterachsbrückenabschnitts 58 und einer Unterkante des Anschlussbefestigungsabschnitts 60 auf. Der Anschlussbefestigungsabschnitt 60 erstreckt sich von einem hinteren Endabschnitt des oberseitigen Rahmenabschnitts 50 in Fahrzeughochrichtung nach unten und weist mehrere in Fahrzeugquerrichtung nebeneinander angeordnete Durchführungen 62 auf, durch welche Schnittstellen des Leistungsstrangs der Arbeitsmaschine 10 in den Aufnahmeraum herein bzw. heraus geführt werden. Wie durch einen Vergleich von Fig. 3 und Fig. 2 zu erkennen ist (siehe Kasten 66), erstreckt sich die Durchgangsöffnung 64 wenigstens von einer Unterkante des ersten Elektromotors 34 und des zweiten Elektromotors 36 zu einer Oberkante des ersten Elektromotors 34 und des zweiten Elektromotors 36 rückseitig an dem Rahmenbauteil. Auch in Fahrzeugquerrichtung ist die Durchgangsöffnung 64 mindestens so breit wie die beiden Elektromotoren 34, 36. Der erste Elektromotor 34 und der zweite Elektromotor 36 sind in Fahrzeughochrichtung oberhalb des Hinterachsbrückenabschnitts 58 und unterhalb des oberseitigen Rahmenabschnitts 50 und auch des Anschlussbefestigungsabschnitts 60 angeordnet. Dadurch sind die Elektromotoren 34, 36 frei zugänglich, um diese anzuschließen.

Der erste Elektromotor 34 weist einen ersten Klemmenkasten 68 für dessen Versorgung mit elektrischer Energie und zwei Anschlüsse 70 für eine Kühlung auf. Der zweite Elektromotor 36 weist einen zweiten Klemmenkasten 72 für dessen Versorgung mit elektrischer Energie und zwei Anschlüsse 74 für eine Kühlung auf. Der erste Klemmenkasten 68 und der zweite Klemmenkasten 72 weisen jeweils mit deren elektrischem Anschluss in Fahrzeuglängsrichtung nach hinten. Die beiden Klemmenkästen 68, 72 und die Anschlüsse 70, 74 für die Kühlung sind im Bereich der Durchgangsöffnung 64 von der Rückseite der Leistungsstranganordnung zum Anschließen einfach zugänglich. Der Doppelinverter 42 ist benachbart zu den beiden Klemmenkästen 68, 72 und zu der Stromquelle angeordnet, womit jeweilige Stromleitungen kurz und damit Verluste gering sind.

In der Draufsicht gemäß Fig. 5 ist mit einem Kasten 76 ein Anschlussbereich eines Nebenantriebs an die entsprechende Abtriebswelle des Getriebes 40 veranschaulicht, wofür das Rahmenbauteil 38 teilweise geschnitten dargestellt ist. Dieser Anschlussbereich und damit auch diese Abtriebswelle des Getriebes 40 ist in Fahrzeugquerrichtung in einem Mittenbereich angeordnet. Damit wird Freiraum für das Lenken mittels des Knickgelenks 20 bereitgestellt und zudem eine Verbindung des Nebenantriebs mit dem Getriebe 40 erleichtert.

In der Vorderansicht gemäß Fig. 4 ist das Rahmenbauteil 38 ebenfalls teilweise geschnitten dargestellt, um einen linken und einen rechten Anschlussbereich für jeweilige Lenkzylinder der Arbeitsmaschine 10 mit Kasten 78 zu veranschaulichen. Dort sind die beiden Lenkzylinder der Arbeitsmaschine mit einem Ende an dem Rahmenbauteil 38 und damit dem Hinterwagen 18 befestigt. An einem entgegengesetzten Ende sind die beiden Lenkzylinder an dem Vorderwagen 16 befestigt. Das Getriebe 40 weist in einem Höhenbereich, welcher sich mit der Befestigung des Lenkzylinders an dem Rahmenbauteil 38 überdeckt, wie durch Kästen 78 veranschaulicht, eine geringere Erstreckung in Fahrzeugquerrichtung auf als in einem anderen Höhenbereich. Dadurch wird viel Freiraum für die Lenkzylinder bereitgestellt. Das Getriebe 40 ist in diesem Bereich am schmalsten. In Fahrzeughochrichtung darüber ist das Getriebe 40 im Bereich der beiden Elektromotoren 34, 36 breiter.

Die Leistungsstranganordnung 30 erlaubt es, die Arbeitsmaschine 10 ohne weitere große konstruktive Änderung mit einem elektrisch betriebenen Leistungsstrang auszurüsten.

### Bezugszeichen

- 10: Arbeitsmaschine
- 12: Baggerschaufel
- 14: Fahrerkabine
- 16: Vorderwagen
- 18: Hinterwagen
- 20: Knickgelenk
- 22: Vorderachse mit Rädern
- 24: Hinterachse mit Rädern
- 30: Leistungsstranganordnung
- 32: Position der Leistungsstranganordnung
- 34, 36: Elektromotoren
- 38: Rahmenbauteil
- 40: Getriebe
- 42: Doppelinverter
- 50: oberseitiger Rahmenabschnitt
- 52: Inverterbefestigungsabschnitt
- 54: Seitenabschnitte
- 56: Vorderabschnitt
- 58: Hinterachsbrückenabschnitt
- 60: Anschlussbefestigungsabschnitt
- 62: Durchführungen
- 64: Durchgangsöffnung
- 66: Markierung Ausrichtung Elektromotoren zur Durchgangsöffnung
- 68, 72: Klemmenkasten
- 70, 74: Anschlüsse
- 76: Anschlussbereich eines Nebenantriebs
- 78: Anschlussbereich für Lenkzylinder

## Patentansprüche

1. Leistungsstranganordnung (30) einer Arbeitsmaschine (10), welche einen ersten Elektromotor (34), einen zweiten Elektromotor (36), ein Rahmenbauteil (38) und ein Getriebe (40) aufweist, wobei der erste Elektromotor (34) und der zweite Elektromotor (36) mit dem Getriebe (40) zur Drehmomentübertragung verbunden sind, wobei der erste Elektromotor (34) und der zweite Elektromotor (36) in Fahrzeugquerrichtung nebeneinander und in Fahrzeughochrichtung wenigstens teilweise auf einem gleichen Niveau angeordnet sind,
**dadurch gekennzeichnet, dass** das Rahmenbauteil (38) einen Aufnahmeraum ausbildet, in welchem der erste Elektromotor (34), der zweite Elektromotor (36) und das Getriebe (40) aufgenommen sind, wobei das Rahmenbauteil (38) einen Hinterachsbrückenabschnitt (58) aufweist, welcher dazu ausgebildet ist, daran eine Gelenkwelle, welche das Getriebe (40) mit einer Hinterachse der Arbeitsmaschine (10) verbindet, drehbar zu lagern und wobei das Rahmenbauteil (38) einen oberseitigen Rahmenabschnitt (50) aufweist, welcher in Fahrzeughochrichtung an einen Kabinenboden der Arbeitsmaschine (10) angrenzend angeordnet ist, wobei der erste Elektromotor (34) und der zweite Elektromotor (36) in Fahrzeughochrichtung oberhalb des Hinterachsbrückenabschnitts (58) und unterhalb des oberseitigen Rahmenabschnitts (50) angeordnet sind.

2. Leistungsstranganordnung (30) nach Anspruch 1, **dadurch gekennzeichnet, dass** das Rahmenbauteil (38) einen ersten Seitenabschnitt (54), einen zweiten Seitenabschnitt (54) und einen Vorderabschnitt (56) aufweist, wobei der erste Seitenabschnitt (54) an einem Endabschnitt des Hinterachsbrückenabschnitts (58) angeordnet ist, der zweite Seitenabschnitt (54) an einem dazu in Fahrzeugquerrichtung gegenüberliegenden Endabschnitt des Hinterachsbrückenabschnitts (58) angeordnet ist, der Hinterachsbrückenabschnitt (58) an einem Endabschnitt des ersten Seitenabschnitts (54) und des zweiten Seitenabschnitts (54) angeordnet ist und der Vorderabschnitt (56) an einem dazu in Fahrzeuglängsrichtung gegenüberliegenden Endabschnitt des ersten Seitenabschnitts (54) und des zweiten Seitenabschnitts (54) angeordnet ist.

3. Leistungsstranganordnung (30) nach Anspruch 1 oder 2, **dadurch gekennzeichnet, dass** der erste Elektromotor (34) und der zweite Elektromotor (36) in Fahrzeuglängsrichtung rückseitig zu dem Getriebe (40) angeordnet sind.

4. Leistungsstranganordnung (30) nach einem der vorhergehenden Ansprüche, **dadurch gekennzeichnet, dass** das Rahmenbauteil (38) zwischen einer Unterkante des ersten Elektromotors (34) und des zweiten (36) Elektromotors und einer Oberkante des ersten Elektromotors (34) und des zweiten (36) Elektromotors rückseitig eine Durchgangsöffnung (64) aufweist.

5. Leistungsstranganordnung (30) nach einem der vorhergehenden Ansprüche, **dadurch gekennzeichnet, dass** der erste Elektromotor (34) einen ersten Klemmenkasten (68) mit einem elektrischen Anschluss aufweist und der zweite Elektromotor (36) einen zweiten Klemmenkasten (72) mit einem elektrischen Anschluss aufweist, wobei der erste Klemmenkasten (68) mit seinem elektrischen Anschluss in Fahrzeuglängsrichtung nach hinten weist und der zweite Klemmenkasten (72) mit seinem elektrischen Anschluss in Fahrzeuglängsrichtung nach hinten weist.

6. Leistungsstranganordnung (30) nach einem der vorhergehenden Ansprüche, **dadurch gekennzeichnet, dass** die Leistungsstranganordnung (30) einen ersten Inverter und einen zweiten Inverter aufweist, wobei der erste Inverter dazu ausgebildet ist, den ersten Elektromotor (34) mit elektrischer Energie zu versorgen, wobei der zweite Inverter dazu ausgebildet ist, den zweiten Elektromotor (36) mit elektrischer Energie zu versorgen, und wobei der erste Inverter und der zweite Inverter in Fahrzeuglängsrichtung hinter dem Rahmenbauteil (38) angeordnet sind.

7. Leistungsstranganordnung (30) nach Anspruch 6, **dadurch gekennzeichnet, dass** das Rahmenbauteil (38) einen Inverterbefestigungsabschnitt (52) aufweist, an welchem der erste Inverter und der zweite Inverter rückseitig befestigt sind und welcher sich in Fahrzeughochrichtung von einem hinteren Endabschnitt des oberseitigen Rahmenabschnitts (50) in Fahrzeughochrichtung nach oben erstreckt und welcher an eine Kabinenrückwand der Arbeitsmaschine (10) angrenzend angeordnet ist.

8. Leistungsstranganordnung (30) nach Anspruch 6 oder 7, **dadurch gekennzeichnet, dass** der erste Inverter und der zweite Inverter gemeinsam als Doppelinverter (42) ausgebildet sind.

9. Leistungsstranganordnung (30) nach einem der vorhergehenden Ansprüche, **dadurch gekennzeichnet, dass** das Rahmenbauteil (38) einen Anschlussbefestigungsabschnitt (60) aufweist, welcher sich von einem hinteren Endbereich des oberseitigen Rahmenabschnitts (50) nach unten erstreckt und welcher wenigstens eine Durchführung (62) für eine Schnittstelle des Leistungsstrangs (30) der Arbeitsmaschine (10) aufweist.

10. Leistungsstranganordnung (30) nach einem der vorhergehenden Ansprüche, **dadurch gekennzeichnet, dass** das Getriebe (40) eine Abtriebswelle für einen Nebenantrieb der Arbeitsmaschine aufweist, welche in Fahrzeugquerrichtung in einem Mittenbereich angeordnet ist.

11. Arbeitsmaschine (10) mit einer Leistungsstranganordnung (30) nach einem der vorhergehenden Ansprüche, einer Fahrerkabine (14), einer Gelenkwelle und einer mit der Gelenkwelle verbundenen Hinterachse, wobei die Gelenkwelle an dem Hinterachsbrückenabschnitt (58) drehbar gelagert ist und der oberseitige Rahmenabschnitt (50) in Fahrzeughochrichtung an den Kabinenboden der Arbeitsmaschine (10) angrenzend angeordnet ist.

12. Arbeitsmaschine (10) nach Anspruch 11, **dadurch gekennzeichnet, dass** die Arbeitsmaschine (10) einen Lenkzylinder aufweist, welcher an dem Rahmenbauteil mit einem Ende befestigt ist, wobei das Getriebe (40) in einem Höhenbereich, welcher sich mit der Befestigung des Lenkzylinders an dem Rahmenbauteil (38) überdeckt, eine geringere Erstreckung in Fahrzeugquerrichtung aufweist als in einem anderen Höhenbereich.

13. Arbeitsmaschine (10) nach Anspruch 11 oder 12, **dadurch gekennzeichnet, dass** die Arbeitsmaschine (10) eine Energiequelle aufweist, welche in Fahrzeuglängsrichtung hinter dem Rahmenbauteil (38) angeordnet ist.

## Claims

1. Powertrain arrangement (30) of a work machine (10), which has a first electric motor (34), a second electric motor (36), a frame component (38) and a transmission (40), wherein the first electric motor (34) and the second electric motor (36) are connected to the transmission (40) for transmitting torque, wherein the first electric motor (34) and the second electric motor (36) are arranged next to one another in the transverse direction of the vehicle and at least partially on the same level in the vertical direction of the vehicle, **characterized in that** the frame component (38) forms a receiving space in which the first electric motor (34), the second electric motor (36) and the transmission (40) are received, wherein the frame component (38) has a rear axle bridge portion (58), which is designed to rotatably mount on the frame component a cardan shaft which connects the transmission (40) to a rear axle of the work machine (10), and wherein the frame component (38) has a top-side frame portion (50), which is arranged adjacent to a cab floor of the work machine (10) in the vertical direction of the vehicle, wherein the first electric motor (34) and the second electric motor (36) are arranged above the rear axle bridge portion (58) and below the top-side frame portion (50) in the vertical direction of the vehicle.

2. Powertrain arrangement (30) according to Claim 1, **characterized in that** the frame component (38) has a first side portion (54), a second side portion (54) and a front portion (56), wherein the first side portion (54) is arranged on an end portion of the rear axle bridge portion (58), the second side portion (54) is arranged on an end portion of the rear axle bridge portion (58) opposite to the previously mentioned end portion in the transverse direction of the vehicle, the rear axle bridge portion (58) is arranged on an end portion of the first side portion (54) and the second side portion (54), and the front portion (56) is arranged on an end portion of the first side portion (54) and the second side portion (54) opposite to the previously mentioned end portion in the longitudinal direction of the vehicle.

3. Powertrain arrangement (30) according to Claim 1 or 2, **characterized in that** the first electric motor (34) and the second electric motor (36) are arranged on the rear side of the transmission (40) in the longitudinal direction of the vehicle.

4. Powertrain arrangement (30) according to any of the preceding claims, **characterized in that** the frame component (38) has a passage opening (64) on the rear side between a lower edge of the first electric motor (34) and the second (36) electric motor and a top edge of the first electric motor (34) and the second (36) electric motor.

5. Powertrain arrangement (30) according to any of the preceding claims, **characterized in that** the first electric motor (34) has a first terminal box (68) with an electrical connection and the second electric motor (36) has a second terminal box (72) with an electrical connection, wherein the first terminal box (68), by way of its electrical connection, faces to the rear in the longitudinal direction of the vehicle and the second terminal box (72), by way of its electrical connection, faces to the rear in the longitudinal direction of the vehicle.

6. Powertrain arrangement (30) according to any of the preceding claims, **characterized in that** the powertrain arrangement (30) has a first inverter and a second inverter, wherein the first inverter is designed to supply the first electric motor (34) with electrical power, wherein the second inverter is designed to supply the second electric motor (36) with electrical power, and wherein the first inverter and the second inverter are arranged behind the frame component (38) in the longitudinal direction of the vehicle.

7. Powertrain arrangement (30) according to Claim 6, **characterized in that** the frame component (38) has an inverter fastening portion (52) to the rear side of which the first inverter and the second inverter are fastened and which extends upwards in the vertical direction of the vehicle from a rear end portion of the top-side frame portion (50) in the vertical direction of the vehicle and which is arranged adjacent to a cab rear wall of the work machine (10).

8. Powertrain arrangement (30) according to Claim 6 or 7, **characterized in that** the first inverter and the second inverter are designed together as a double inverter (42).

9. Powertrain arrangement (30) according to any of the preceding claims, **characterized in that** the frame component (38) has a connection fastening portion (60), which extends downwards from a rear end region of the top-side frame portion (50) and which has at least one feedthrough (62) for an interface of the powertrain (30) of the work machine (10).

10. Powertrain arrangement (30) according to any of the preceding claims, **characterized in that** the transmission (40) has an output shaft for an auxiliary drive of the work machine, which output shaft is arranged in a central region in the transverse direction of the vehicle.

11. Work machine (10) comprising a powertrain arrangement (30) according to any of the preceding claims, a driver's cab (14), a cardan shaft and a rear axle which is connected to the cardan shaft, wherein the cardan shaft is rotatably mounted on the rear axle bridge portion (58) and the top-side frame portion (50) is arranged adjacent to the cab floor of the work machine (10) in the vertical direction of the vehicle.

12. Work machine (10) according to Claim 11, **characterized in that** that the work machine (10) has a steering cylinder which is fastened to the frame component by way of one end, wherein the transmission (40) has a smaller extent in the transverse direction of the vehicle in a height range which overlaps with the fastening of the steering cylinder to the frame component (38) than in another height range.

13. Work machine (10) according to Claim 11 or 12, **characterized in that** the work machine (10) has a power source, which is arranged behind the frame component (38) in the longitudinal direction of the vehicle.

## Revendications

1. Agencement (30) de chaîne cinématique d'une machine de travail (10), qui comprend un premier moteur électrique (34), un deuxième moteur électrique (36), un élément châssis (38) et une transmission (40), le premier moteur électrique (34) et le deuxième moteur électrique (36) étant reliés à la transmission (40) pour la transmission du couple, le premier moteur électrique (34) et le deuxième moteur électrique (36) étant agencés l'un à côté de l'autre dans la direction transversale du véhicule et, dans la direction verticale du véhicule, au moins en partie au même niveau,
**caractérisé en ce que** l'élément châssis (38) forme un espace de réception dans lequel le premier moteur électrique (34), le deuxième moteur électrique (36) et la transmission (40) sont logés, l'élément châssis (38) comportant une partie pont d'essieu arrière (58) qui est conçue pour supporter de manière rotative un arbre à cardan qui relie la transmission (40) à un essieu arrière de la machine de travail (10), et l'élément châssis (38) présentant une partie de châssis (50) de côté supérieur qui est agencée dans la direction verticale du véhicule de manière adjacente à un plancher de cabine de la machine de travail (10), le premier moteur électrique (34) et le deuxième moteur électrique (36) étant agencés dans la direction verticale du véhicule au-dessus de la partie pont d'essieu arrière (58) et au-dessous de la partie de châssis (50) de côté supérieur.

2. Agencement (30) de chaîne cinématique selon la revendication 1, **caractérisé en ce que** l'élément châssis (38) comporte une première partie latérale (54), une deuxième partie latérale (54) et une partie avant (56), la première partie latérale (54) étant agencée sur une partie d'extrémité de la partie pont d'essieu arrière (58), la deuxième partie latérale (54) étant agencée sur une partie d'extrémité de la partie pont d'essieu arrière (58) opposée à elle dans la direction transversale du véhicule, la partie pont d'essieu arrière (58) étant agencée sur une partie d'extrémité de la première partie latérale (54) et de la deuxième partie latérale (54), et la partie avant (56) étant agencée sur une partie d'extrémité de la première partie latérale (54) et de la deuxième partie latérale (54) qui lui est opposée dans la direction longitudinale du véhicule.

3. Agencement (30) de chaîne cinématique selon la revendication 1 ou la revendication 2, **caractérisé en ce que** le premier moteur électrique (34) et le deuxième moteur électrique (36) sont agencés dans la direction longitudinale du véhicule à l'arrière de la transmission (40).

4. Agencement (30) de chaîne cinématique selon l'une des revendications précédentes, **caractérisé en ce que** l'élément châssis (38) présente, côté arrière, une ouverture traversante (64) située entre un bord inférieur du premier moteur électrique (34) et du deuxième moteur électrique (36) et un bord supérieur du premier moteur électrique (34) et du deuxième moteur électrique (36).

5. Agencement (30) de chaîne cinématique selon l'une des revendications précédentes, **caractérisé en ce que** le premier moteur électrique (34) comprend un premier boîtier de raccordement (68) avec un raccordement électrique et le deuxième moteur électrique (36) comprend un deuxième boîtier de raccordement (72) avec un raccordement électrique, le premier boîtier de raccordement (68) ayant son raccordement électrique orienté vers l'arrière dans la direction longitudinale du véhicule, et le deuxième boîtier de raccordement (72) ayant son raccordement électrique orienté vers l'arrière dans la direction longitudinale du véhicule.

6. Agencement (30) de chaîne cinématique selon l'une des revendications précédentes, **caractérisé en ce que** l'agencement (30) de chaîne cinématique comprend un premier onduleur et un deuxième onduleur, le premier onduleur étant conçu pour alimenter le premier moteur électrique (34) en énergie électrique, le deuxième onduleur étant conçu pour alimenter le deuxième moteur électrique (36) en énergie électrique, et le premier onduleur et le deuxième onduleur étant agencés dans la direction longitudinale du véhicule derrière l'élément châssis (38).

7. Agencement (30) de chaîne cinématique selon la revendication 6, **caractérisé en ce que** l'élément châssis (38) comprend une partie (52) de fixation d'onduleur sur laquelle le premier onduleur et le deuxième onduleur sont fixés à l'arrière et qui s'étend vers le haut dans la direction verticale du véhicule depuis une partie d'extrémité arrière de la partie supérieure du châssis (50) dans la direction verticale du véhicule, et qui est agencée de manière adjacente à une paroi arrière de la cabine de la machine de travail (10).

8. Agencement (30) de chaîne cinématique selon la revendication 6 ou la revendication 7, **caractérisé en ce que** le premier onduleur et le deuxième onduleur sont réalisés ensemble sous la forme d'un double onduleur (42).

9. Agencement (30) de chaîne cinématique selon l'une des revendications précédentes, **caractérisé en ce que** l'élément châssis (38) comprend une partie (60) de fixation de raccordement qui s'étend vers le bas à partir d'une zone d'extrémité arrière de la partie de châssis (50) de côté supérieur, et qui comprend au moins un passage (62) pour une interface de la chaîne cinématique (30) de la machine de travail (10).

10. Agencement (30) de chaîne cinématique selon l'une des revendications précédentes, **caractérisée en ce que** la transmission (40) comprend un arbre de sortie pour un entraînement auxiliaire de la machine de travail, qui est agencé dans la direction transversale du véhicule dans une zone centrale.

11. Machine de travail (10) comprenant un agencement (30) de chaîne cinématique selon l'une des revendications précédentes, une cabine de conducteur (14), un arbre à cardan et un essieu arrière relié à l'arbre à cardan, l'arbre à cardan étant monté de manière rotative sur la partie pont d'essieu arrière (58) et la partie de châssis (50) de côté supérieur étant agencée dans la direction verticale du véhicule, de manière adjacente au plancher de la cabine de la machine de travail (10).

12. Machine de travail (10) selon la revendication 11, **caractérisée en ce que** la machine de travail (10) comprend un vérin de direction qui est fixé par une extrémité à l'élément châssis, la transmission (40) présentant, dans une zone en hauteur qui recouvre la fixation du vérin de direction à l'élément châssis (38), une extension dans la direction transversale du véhicule qui est inférieure à celle dans une autre zone en hauteur.

13. Machine de travail (10) selon la revendication 11 ou la revendication 12, **caractérisée en ce que** la machine de travail (10) comprend une source d'énergie qui est agencée dans la direction longitudinale du véhicule derrière l'élément châssis (38).
